# EUROPEAN PATENT APPLICATION

(11) **EP 1 276 278 A1**
(43) Date of publication of application: **15.01.2003**
(21) Application number: 02705341.2
(22) Date of filing: 19.03.2002
(51) Int. Cl.: H04L 12/28, H04L 12/40

(54) **DATA TRANSMISSION METHOD AND DATA TRANSMISSION DEVICE**

(30) Priority: 19.03.2001 JP 2001079565
(71) Applicant: Sony Corporation, Tokyo 141-0001 (JP)
(72) Inventor: OSAKABE, Yoshio, c/o SONY CORPORATION, Tokyo 141-0001 (JP); TAKAKU, Yoshiyuki, c/o SONY CORPORATION, Tokyo 141-0001 (JP); FUJISHITA, Kaneaki, c/o SONY CORPORATION, Tokyo 141-0001 (JP); ICHIMURA, Gen, c/o SONY CORPORATION, Tokyo 141-0001 (JP); NAKANO, Takehiko,c/o SONY CORPORATION, Tokyo 141-0001 (JP)
(74) Representative: Pilch, Adam John Michael
(86) International application number: JP0202602
(87) International publication number: WO02076026

(57) **Abstract**

The invention relates to a method of transmitting data and the like which are preferably applied to cases where different types or schemes of data are transmitted using a bus line, for example, an IEEE1394 bus line. Data of one sample is transmitted using multiple slots each having a data length of 32 bits. For example, when the data of one sample has 128 bits, data of one sample is transmitted using 8 slots. Each slot includes segmented 16 bits. The leading 8 bits of the 32-bit data constitute label data, with its lowest 3 bits indicating a slot number. Information regarding the number of data bits to be included in one slot is contained in the ancillary data. Data can be easily transmitted if the number of bits in the data of one sample exceeds the maximum bits by which the data can be transmitted using one slot.

## Description

### TECHNICAL FIELD

The invention relates to method of and apparatus for transmitting data that are preferable to transmitting various schemes of audio data and image data using, for example, IEEE1394 bus line.

More particularly, the invention relates to method of and apparatus for transmitting data of one sample using multiple slots of a predetermined data length when transmitting the data among pieces of apparatus each connected to a predetermined bus line in a unit of a predetermined data length and in a predetermined format, thereby enabling high-quality data transmission.

The invention also relates to method of and apparatus for transmitting data wherein a first scheme of transmission data to be transmitted is processed to generate a second scheme of transmission data to be transmitted with the second scheme of transmission data being added with at least a portion of the first scheme of transmission data and the second scheme of transmission data is transmitted, thereby directly obtaining information contained in the first scheme of transmission data from the information thus added to the second scheme of transmission data.

### BACKGROUND ART

Data transmission such as video data transmission and audio data transmission among multiple AV devices interconnected through a network using an IEEE1394 bus line has been in practice. The IEEE1394 bus line is configured to provide an isochronous data transmission channel (Iso channel) for transmitting a large amount of video data, audio data and the like, and an asynchronous transmission channel (Async channel) for transmitting data including control commands such that the data of both channels can be mixed in the data transmission.

Details of a data format for audio data (musical data) transmitted through the IEEE 1394 bus line are disclosed in Audio and Music Data Transmission Protocol, which can be accessed on web site http://www.1394TA.org.

In the above mentioned data format for transmitting audio data, data to be placed in a data field is formed in a unit of 32 bits, and an arbitrary number of units of the data of 32 bits can be placed in the data field.

Placed in a first 8-bit block of the data of 32 bits is label data. The label data illustratively indicates the type of the audio data that follows the label data. That is, audio data is included in remaining 24-bit block. For example, in a case where a sample contains 16-bit audio data, 16-bit block out of the 24 bits is used for the audio data.

In this format, audio data can be transmitted up to 24 bits per one sample. It is therefore impossible to transmit high-quality audio data that requires more than 24 bits per one sample.

Where a compact disk (CD) player reproduces, sends, and transmits audio data according to IEC 60958 standard to a preamplifier that reforms a scheme of the audio data to another and transmits the audio data thus reformed to a power amplifier, the amplifier may not directly retrieve or utilize such information as user's bit and channel status included in the IEC 60958 audio data.

In another case, a Super Audio CD (SACD) player reproduces, sends, and transmits audio data according to a SACD standard to a preamplifier that reforms a scheme of the audio data to another and transmits the audio data thus reformed to a power amplifier, the amplifier may not directly retrieve ancillary data contained in the SACD audio data to fail to recognize that audio data has the SACD standard, or to fail to decrypt the audio data if it is encrypted.

### DISCLOSURE OF INVENTION

It is therefore an object of the invention to provide a method of and an apparatus for allowing high-quality data to be transmitted among pieces of apparatus each connected to a predetermined bus line in a unit of a predetermined data length and in a predetermined format. It is another object of the invention to provide a method of and an apparatus for transmitting data wherein a first scheme of transmission data is processed to generate a second scheme of transmission data and, in transmitting the second scheme of transmission data, information contained in the first scheme of transmission data is directly obtained from information added to the second scheme of transmission data.

In accordance with one embodiment of the invention, there is provided a method of transmitting data among pieces of apparatus each connected to a predetermined bus line in a unit of a predetermined data length and in a predetermined format wherein data of one sample is transmitted using multiple slots of the predetermined data length.

In accordance with another embodiment of the invention, there is provided an apparatus for transmitting data, the apparatus comprising data acquisition means for acquiring a predetermined item of transmission data including consecutive items of data of multiple samples, the items of data of one sample having N bits (N being an integer larger than 1), data generation means for generating data having a predetermined data length by dividing the items of data of the respective samples constituting the predetermined item of transmission data acquired by the data acquisition means into M segments (M being an integer larger than 1) and adding label data to each head of the M segments of the items of data of the respective samples, the label data indicating a format of the transmission data and an arranged position of each segment, and data sending means for sending the data having said predetermined data length generated by the data generation means to a predetermined bus line.

A method of transmitting data in accordance with another embodiment of the invention comprises steps of acquiring a predetermined item of transmission data including consecutive items of data of multiple samples, the items of data of one sample having N bits (N being an integer larger than 1), respectively dividing the items of data of the respective samples constituting the predetermined item of transmission data thus acquired into M segments (M being an integer larger than 1), generating data having a predetermined data length by adding label data to each head of the M segments of respective items of data of the samples, the label data indicating a format of the transmission data and an arranged position of each segment, and sending the data thus generated having a predetermined data length to a predetermined bus line.

An apparatus for transmitting data in accordance with a further embodiment of the invention comprises data reception means for receiving from a predetermined bus line consecutive items of data having a predetermined data length, and data generation means for generating data including data of one sample, the data of one sample having N bits (N being an integer larger than 1), by determining an arranged position of each of the M items of data (M being an integer larger than 1) included in the consecutive items of data with referring label data added into the respective items of data and integrating first through Mth items of data.

A method of transmitting data in accordance with a still further embodiment of the invention comprises steps of receiving from a predetermined bus line consecutive items of data having a predetermined data length, determining an arranged position of each of the M items of data (M being an integer larger than 1) included in the consecutive items of data, with referring label data added to the respective items of data, integrating first through Mth items of data, and generating an item of data including consecutive items of data, the items of data of one sample having N bits (N being an integer larger than 1).

According to the invention, data of one sample is transmitted using multiple slots each having a predetermined data length. As a result, transmission of high-quality data having a large number of bits per one sample is performed without being limited by the number of bits available for transmitting data in one slot.

According to still another embodiment of the invention, a method of transmitting data comprises steps of processing transmission data of first scheme to generate transmission data of second scheme, and transmitting the data with at least a portion of the transmission data of first scheme being added to the data of second scheme.

According to still further embodiment of the invention, a method for transmitting data comprises data-processing means for processing transmission data of first scheme to generate transmission data of second scheme, and data transmission means for transmitting the data with at least a portion of the transmission data of first scheme to the transmission data of second scheme generated by the data processing means.

In the embodiments, at least a portion of the data of first scheme is added to the data of second scheme. As a result, information contained in the data of first scheme is available by directly retrieving it from information added to the data of second scheme.

### BRIEF DESCRIPTION OF DRAWINGS

Fig. 1 is a block diagram showing a configuration of an audio system according to an embodiment of the invention.
Fig. 2 is a block diagram showing a configuration of a CD player.
Fig. 3 is a block diagram showing a configuration of a preamplifier.
Fig. 4 is a block diagram showing a configuration of a power amplifier.
Fig. 5 is a diagram illustrating a cyclic structure of data transmission through an IEEE1394 bus.
Fig. 6 is a diagram illustrating a structure of address space of CSR architecture.
Fig. 7 is a table listing offset addresses, names and functions of major CSRs.
Fig. 8 illustrates a general ROM format.
Fig. 9 illustrates details of bus_info_block, root_directory, and unit_directory.
Fig. 10 illustrates a structure of a plug control register (PCR).
Fig. 11A shows a structure of oMPR; Fig. 11B, a structure of oPCR; Fig. 11C, a structure of iMPR; and Fig. 11D, a structure of iPCR.
Fig. 12 is a diagram showing a relationship between flags, flag control registers, and isochronous channels.
Fig. 13 is a diagram showing a data structure of Subunit Identifier Descriptor.
Fig. 14 shows a data format of Subunit Identifier Descriptor.
Fig. 15 shows a data structure of generation_ID.
Fig. 16 illustrates range of values assigned to list_IDs.
Fig. 17 is a diagram showing a stack model of an AV/C command set.
Fig. 18 is a diagram showing relationships between FCP commands and responses thereto.
Fig. 19 is a diagram showing in more detail the relationships between FCP commands and the responses thereto.
Fig. 20 is a diagram showing a data structure of the packets that are transmitted in asynchronous transfer mode of AV/C command.
Figs. 21A-21C together illustrate an exemplary AV/C command.
Figs. 22A and 22B respectively illustrates an exemplary AV/C command and a response thereto.
Fig. 23 shows a data structure of isochronous packets that are transmitted through an isochronous channel.
Fig. 24 is a diagram showing a data structure of unitary 32-bit data placed in a data field.
Fig. 25 is a table listing definitions of label data placed at the head of 32-bit data.
Fig. 26 is a diagram showing a relationship between label data and data placed in subsequent blocks.
Fig. 27 is a diagram showing a data structure of unitary 32-bit data for use with IEC60958 audio data.
Fig. 28 is a table listing definitions of PACs.
Fig. 29 is a diagram showing a data structure of unitary 32-bit data for use with multi-bit linear audio data of high precision.
Fig. 30 is a table showing a correspondence between the value of the lowest three bits of label data and slot numbers.
Fig. 31 is a table showing a correspondence between the values "C0"-"CF" of label data for common ancillary data and the contents of the common ancillary data placed in subsequent blocks.
Fig. 32 is a table showing a correspondence between the values "D0"-"EF" of label data for application specific ancillary data and the contents of the application specific ancillary data placed in subsequent blocks.
Fig. 33 is a diagram showing a general format of application specific ancillary data.
Figs. 34A and 34B are diagrams showing a data structure of 32-bit data for use with high-precision ancillary data.
Fig. 35 is a table showing a correspondence between the values of channel data placed in an ancillary data and the number of channels.
Fig. 36 is a table showing a correspondence between the value of precision data and the number of bits available for transmitting audio data in the 24-bit block constituting a slot.
Fig. 37 is a table listing recommended example of slot lengths and number of slots available for different word lengths (number of data bits in one sample).
Fig. 38 shows an exemplary 32-bit data structure associated with SACD ancillary data.
Fig. 39 is a table listing the contents of each item of data contained in the ancillary data.
Fig. 40 shows an exemplary 32-bit data structure associated with DVD-audio ancillary data.
Fig. 41 is a table listing the contents of each item of data contained in the ancillary data.
Fig. 42 is a diagram showing an exemplary arrangement of ancillary data in one packet along with audio data.
Fig. 43 shows an exemplary high-precision stream placed in the data field of one packet (128-bit sample word for 2 channels).
Fig. 44 shows another exemplary high-precision stream placed in the data field of one packet (48-bit sample word for six channels).
Fig. 45 shows a still another exemplary high-precision stream placed in the data field of one packet (48-bit word for four channels in two blocks).
Fig. 46 shows a further exemplary high-precision stream placed in the data field of one packet (added with IEC60958 audio data).
Fig. 47 is a block diagram showing a configuration of another audio system to which the invention can be applied.
Fig. 48 shows an exemplary high-precision stream placed in the data field of one packet (added with SACD ancillary data).

### BEST MODE FOR CARRYING OUT THE INVENTION

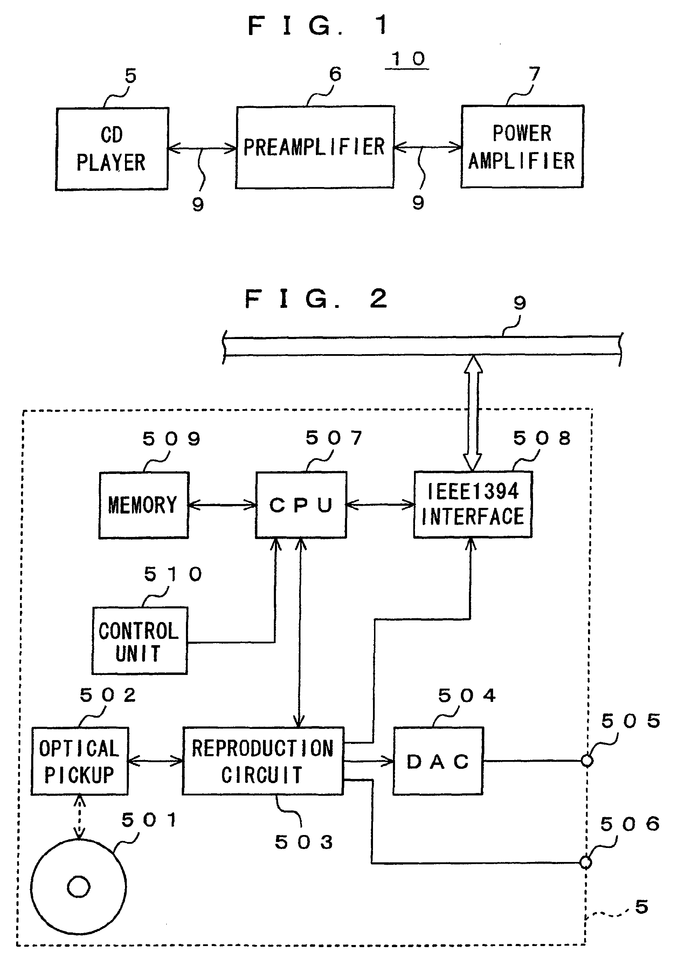

Embodiments of the invention will now be described below. Referring to Fig. 1, there is shown an audio system 10 in accordance with an embodiment of the invention. The audio system 10 comprises a CD player 5, a preamplifier 6, and a power amplifier 7 which includes a digital-to-analog (DA) converter, all connected with each other through the digital communication control bus or IEEE1394 serial data bus (hereinafter simply referred to as bus).

The CD player 5 is a device for reproducing audio data by retrieving the data from a compact disk (CD). The preamplifier 6 performs the processing such as sound quality regulation and pre-amplification on IEC60958 audio data supplied from the CD player 5, and converts the IEC60958 audio data to high-precision scheme audio data, as described later. The power amplifier 7 performs amplification on high-precision scheme audio data supplied from the preamplifier 6 and converts it to analog signal.

Referring to Fig. 2, there is shown a configuration of the CD player 5.

Signal recorded on a compact disk 501 mounted on the CD player 5 is optically read by means of an optical pickup 502, the signal thus read is then supplied to a reproduction circuit 503 which performs reproduction process such as decoding and error correction, thereby generating reproduction data (digital audio data).

DA converter 504 converts the reproduction data to analog audio signal before it is output from the analog output terminal 505. The reproduction circuit 503 outputs the digital audio data thus obtained to a digital output terminal 506. In addition, the reproduction circuit 503 also supplies the reproduction data thus obtained to an IEEE1394 interface section 508 so that the data is sent as a stream of data to the bus 9 connected to the interface section 508.

Reproductive operations of the compact disk 501 are executed under the control of a central processing unit (CPU) 507. The CPU 508 controls data transmission from the IEEE1394 interface section 508 to the bus 9, and data reception from the bus 9 by the interface section 508. The CPU 507 is connected to a memory 509 for storing data necessary for control operations. Operational data relating to the control unit 510 arranging control keys such as a reproduction key thereon is supplied to the CPU 507.

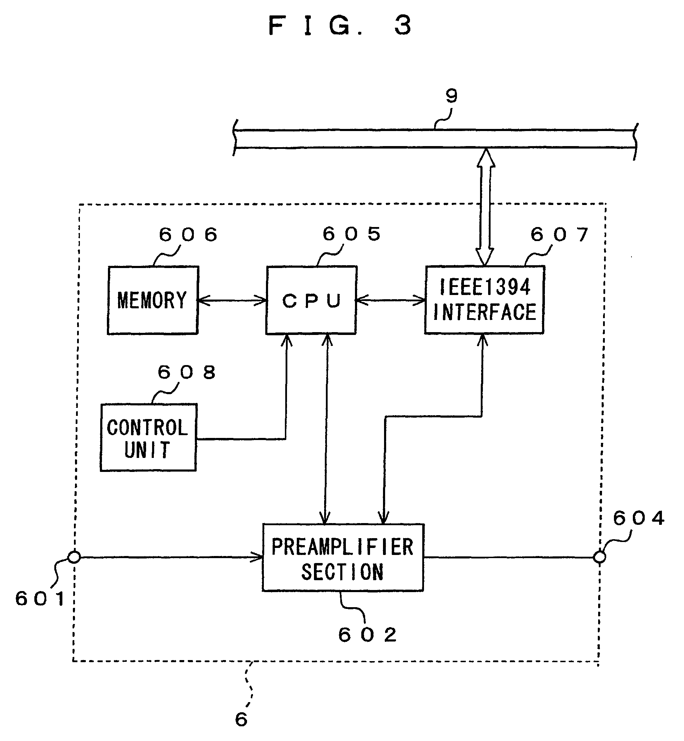

Referring to Fig. 3, there is shown a configuration of the preamplifier 6.

An amplifier section 602 receives the digital audio data provided at an input terminal 601 to perform the processing such as sound quality regulation and pre-amplification thereon. Under the control of the CPU 605, the preamplifier section 602 performs conversion processing from the IEC60958 audio data, which is supplied from the CD player 5 via the bus 9, to high precision scheme audio data as described later.

The preamplifier section 602 processes the digital audio data and provides the digital audio data thus processed for an output terminal 604. Processing operations in the preamplifier 6 run under the control of the CPU 605. The CPU 605 also controls data transmission from the IEEE1394 interface section 607 to the bus 9 and data reception from the bus 9 by the IEEE1394 interface section 607. The CPU 605 is connected with a memory 606 for storing necessary control data and the like. A control unit 608 arranging control keys and the like supplies operational data to the CPU 605, thereby allowing sound quality or the like to be set on the basis of the operational data.

When the IEEE1394 interface section 607 receives audio data through the bus 9, the preamplifier section 602 receives the audio data and performs the same processing as that on the audio signal obtained at the input terminal 601, thereby allowing it to be output through the output terminal 604.

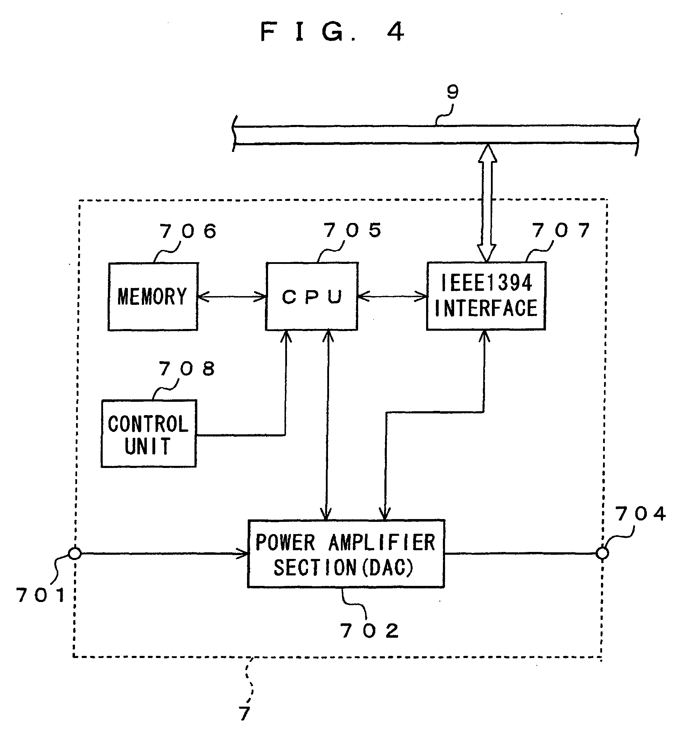

Referring to Fig. 4, there is shown a configuration of an exemplary power amplifier 7.

A power amplifier section 702 receives digital audio data obtained at an input terminal 701 to perform the processing such as an amplification and digital-to-analog conversion. Under the control of a CPU 705, the power amplifier section 702 also performs the processing such as amplification and digital-to-analog conversion on the high-precision scheme audio data supplied from the preamplifier 6 via the bus 9.

The power amplifier section 702 processes the analog audio signal and outputs the signal thus processed through an output terminal 704. The processing operations in the power amplifier 7 run under the control of the CPU 705. The CPU 705 also controls data transmission from IEEE1394 interface section 707 to the bus 9 and data reception from the bus 9 by the interface section 707. The CPU 705 is connected to a memory 706 for storing necessary control data and the like. A control unit 708 arranging control keys and the like supplies operational data to the CPU 705, thereby allowing amplification or the like to be set on the basis of the operational data.

Each of the devices 5-7 (Fig. 1) connected to the bus 9 is generally referred to as units. Using "descriptors" defined by AV/C Digital Interface Command Set General Specification (hereinafter referred to as AV/C) in accordance with AV/C Command Transaction Set allows the units to read and/or write information stored therein to and from each other and one unit to control other units. Details of the AV/C are disclosed on the web site, http://www.1394TA.org.

Each of the units connected to the bus 9 is also called "node". Nodes are provided with a respective node ID for identifying the sender and the receiver of data on the bus. Relating to the node ID, a bus reset occurs every time a new device is connected to the bus 9 and an existing device is disconnected from the bus 9, so that the node ID can be processed to be updated. Thus, when the bus reset occurs, the node IDs of the respective units may be changed.

Next, data transmission by means of IEEE1394 serial data bus will be described.

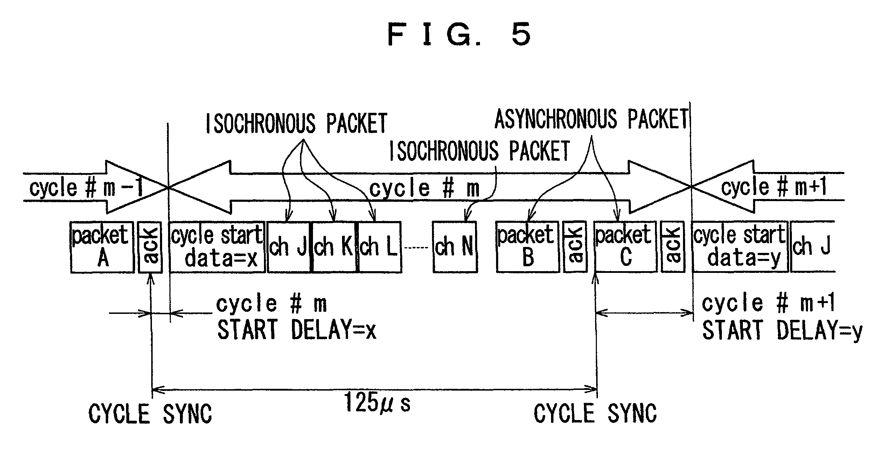

Fig. 5 shows a cycle structure of data transmission cycle of a device connected to the IEEE1394 bus. In the IEEE1394 standard, data is segmented into packets for transmission in a time division mode in cycles each having a period of 125 microseconds. This cycle is established by a cycle start signal supplied from a node (i.e. a device connected to the IEEE1394 bus) having a cycle master function.

Isochronous packets ensure a necessary band for transmission (the band is specified by a time unit) from a head of each cycle. Thus, in isochronous transmission, data transmission within a prescribed time interval is guaranteed. The data will be lost, however, if an error occurs in the transmission, since there is no protective measure provided in the isochronous transmission.

By contrast, in asynchronous transmission that a node ensures the bus in each cycle through arbitration when no bus is used for isochronous transmission and sends asynchronous packet, data is securely transmitted using acknowledgments and retries. Constant transmission timing thereof, however, fails to occur.

In order for a node to carry out the isochronous transmission, the node must support the isochronous function used. At least one of the nodes supporting the isochronous function also must have cycle master function. Further, at least one of the nodes connected to the IEEE1394 bus must have isochronous resource manager function.

The IEEE1394 standard is in conformity with the control and status register (CSR) architecture having a 64-bit address space of ISO/IEC 13213.

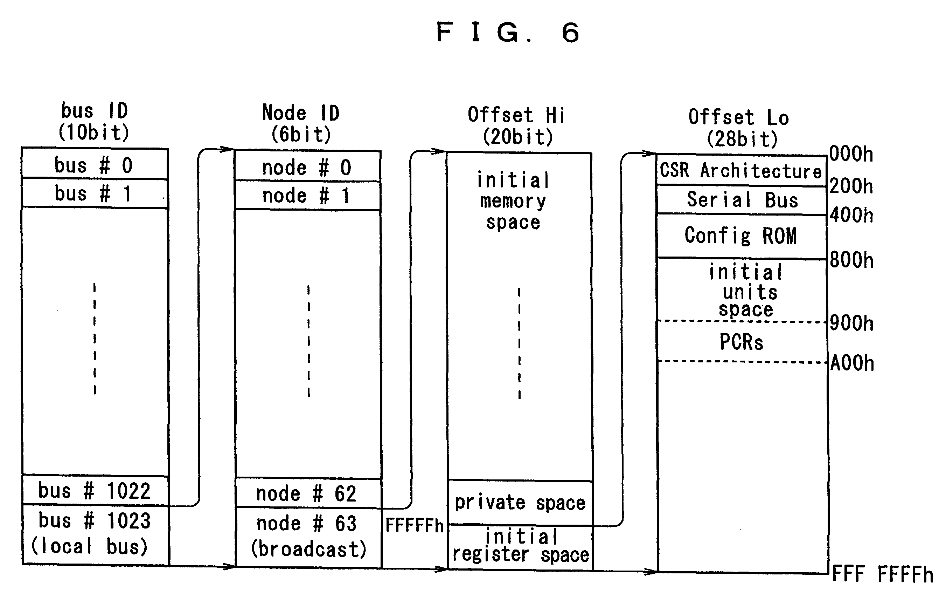

Fig. 6 is a diagram illustrating a structure of address space of CSR architecture. The upper 16 bits indicate node IDs, which are used to specify respective nodes on the IEEE1394 bus. Remaining 48 bits are used to address the address spaces allocated to the respective nodes. The upper 16 bits are further divided to 10 bits for bus IDs and 6 bits for physical IDs (node IDs in a strict sense). Since the data with all the bits being 1 is used for a special purpose, they can specify 1023 busses and 63 nodes.

Of the 256-tera bytes-address space defined by the lower 48 bits, the space defined by the upper 20 bits is divided into an initial register space for 2048-byte CSR-specific registers, IEEE1394-specific register and the like, a private space, an initial memory space, and the like.

The space defined by the lowest 28 bits is used for configuration read-only-memory (ROM), node-specific initial unit space, plug control registers (PCRs), and the like if the space defined by the upper 20 bits of the 28-bit space is the initial register space.

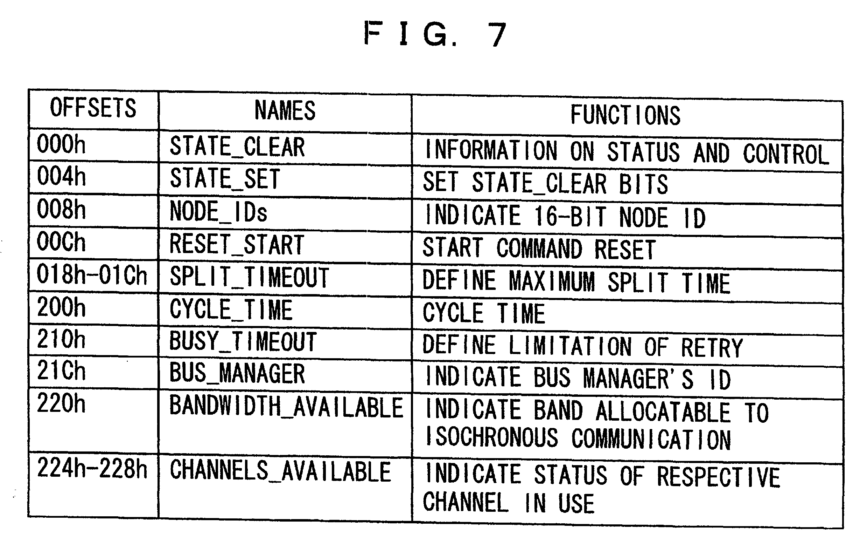

Fig. 7 is a table listing offset addresses, names, and functions of major CSRs.

The offset addresses refer to the offset addresses with reference to the address FFFFF0000000ₕ ("h" at the end of the addresses indicating hexadecimal representation) where the initial register space begins. The bandwidth_available register having an offset value of 220ₕ indicates a band that can be allocated for isochronous communications, in which only the node acting as an isochronous resource manager is validated.

That is, although each of the nodes has the CSR as shown in Fig. 6, a bandwidth_available register is validated only if it belongs to the isochronous resource manager. In other words, the bandwidth_available register is in practice owned solely by the isochronous source manager. The bandwidth_available register has a maximum value when no band is allocated for isochronous communication. The value decreases every time a band is allocated for isochronous communication.

Channels_available registers have offset values 224ₕ-228ₕ. Each bit of the offset register corresponds to channels of channel numbers 0-63. If the bit value is 0, it means that the channel has been already assigned. Only the channels_available register of the node acting as isochronous resource manger is validated.

Referring back to Fig. 6, it is shown that a configuration ROM based on a general ROM format is placed in the space having addresses 400ₕ-800ₕ within initial register space.

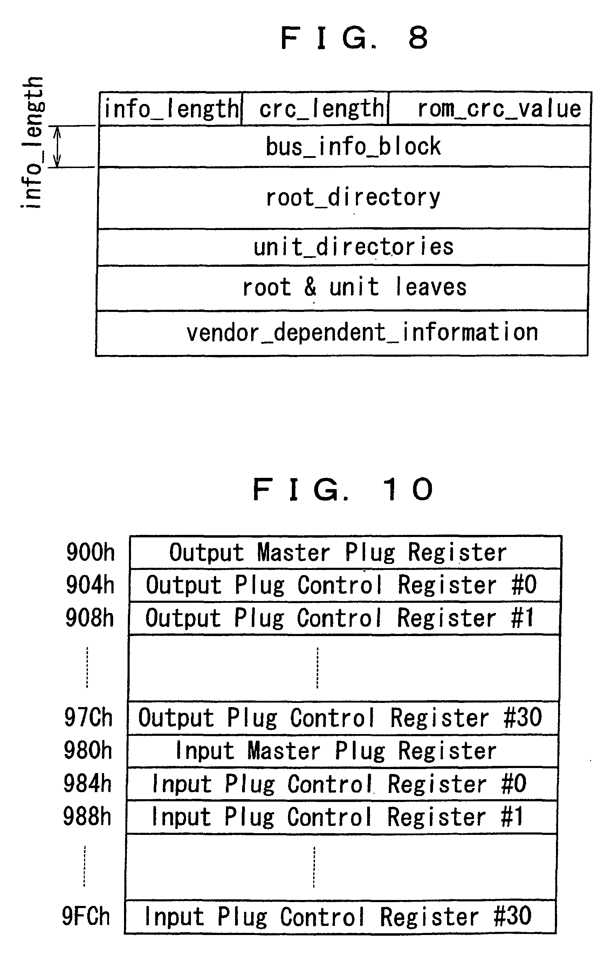

Fig. 8 illustrates the general ROM format. A node, which is an accessible entity according to the IEEE1394 standard, can include multiple units that share a common address space within the node but act independently. The unit_directories indicates the version and the location of software associated with the unit. Locations of the bus_info_block and the root_directory are fixed, but the locations of other blocks are specified by their offset addresses.

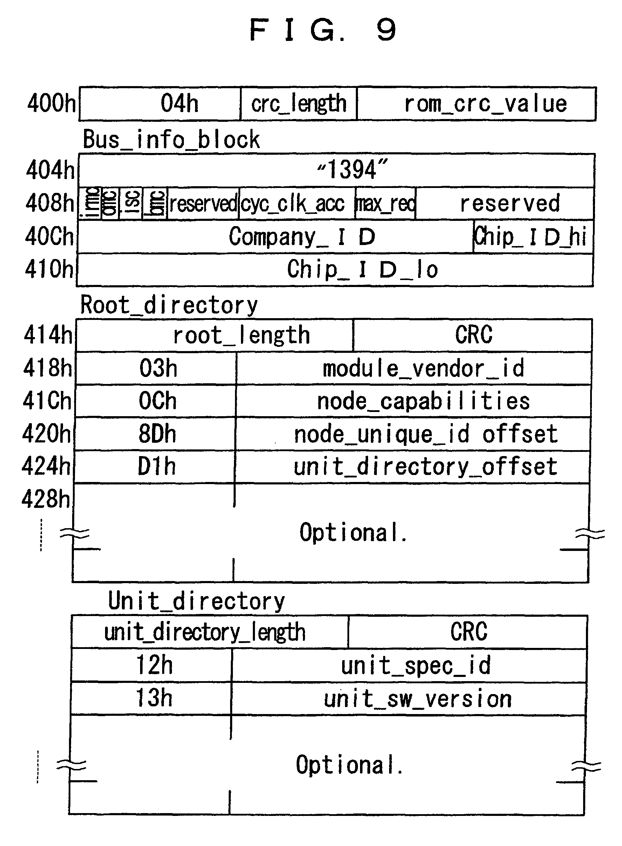

Fig. 9 illustrates details of the bus_info_block, the root_directory, and the unit_directory. The Company_ID in the bus_info_block stores ID number indicating the manufacturer of a device. The Chip_ID stores a non-overlapping device-specific ID of the device, which is globally unique to that particular device. In accordance with the IEC1833 standard, 00ₕ is written into the first octet of the unit_spec_id of the unit_directory of a device complied with the IEC1883. A0ₕ and 2Dₕ are written into the second and the third octets, respectively. In addition, 01ₕ is written into the first octet of the unit_sw_version, and 1 is written into the least significant bit (LSB) of the third octet.

In order to control I/O transactions of a device connected to the bus via the interface thereof, each node is provided with a plug control register (PCR) in compliance with IEC1883 standard in the address space of 900ₕ-9FFₕ within the initial unit space, as shown in Fig. 6. This is a realization of "plug" concept for logically establishing a signal path in analogy to an analog interface.

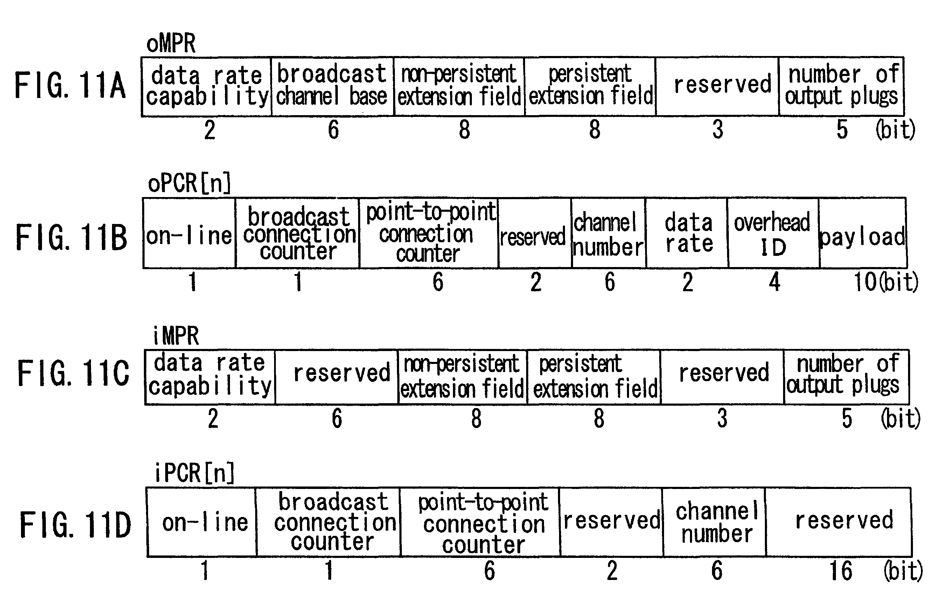

Fig. 10 illustrates a structure of the PCR. The PCR has output Plug Control Resister (oPCR) and input Plug Control Register (iPCR) respectively representing an output plug and an input plug. The PCR also has output Master Plug Register (oMPR) and input Master Plug Register (iMPR), which provide information on the device-specific output plug and input plug, respectively.

Each device does not have more than one oMPR and one iMPR, but, depending on the capability of the device, may have multiple oPCRs and iPCRs associated with the respective plugs. The PCR shown in Fig. 10 has 31 oPCRs and 31 iPCRs. Flow of isochronous data is controlled by controlling the registers associated with these plugs.

Fig. 11A shows a structure of oMPR; Fig. 11B, a structure of oPCR; Fig. 11C, a structure of iMPR; and Fig. 11D, a structure of iPCR. Each of the "data rate capability" of 2 bits in the most significant bit (MSB) side of oMPR and of iMPR stores a code indicating the maximum transmission rates at which the device can transmit and receive isochronous data. The "broadcast channel base" of oMPR specifies a channel number to be used for broadcast output.

The "number of output plugs" of 5 bits in the least significant bit (LSB) of oMPR stores the number of output plugs owned by the device, i.e., value indicating number of oPCRs. The "number of input plugs" of 5 bits in the MLB side of iMPR stores the number of input plugs owned by the device, i.e., value indicating number of iPCRs. The "non-persistent extension field" and "persistent extension field" are reserved for future use.

The values of the "on-line" in the MSB sides of oPCR and of iPCR indicate use status of the plug. That is, if the value of the "on-line" is 1, the plug is on-line, otherwise the plug is off-line. The values of the "broadcast connection counter" of oPCR and of iPCR indicate whether a broadcast connection exists (1) or not (0). The values of 6-bit "point-to-point connection counter" of oPCR and of iPCR indicate the number of point-to-point connections owned by the respective plugs.

The values of 6-bit "channel number" of oPCR and iPCR indicate channel numbers of the isochronous channel to which the plug is connected. The value of 2-bit "data rate" of oPCR indicates an actual transmission rate of isochronous data packets the plug outputs. The code stored in the 4-bit "overhead ID" of oPCR indicates an excess exceeding the overhead bandwidth of isochronous communications. The value of 10-bit "payload" of oPCR indicates the maximum value of data contained in an isochronous packet that can be dealt with by that plug.

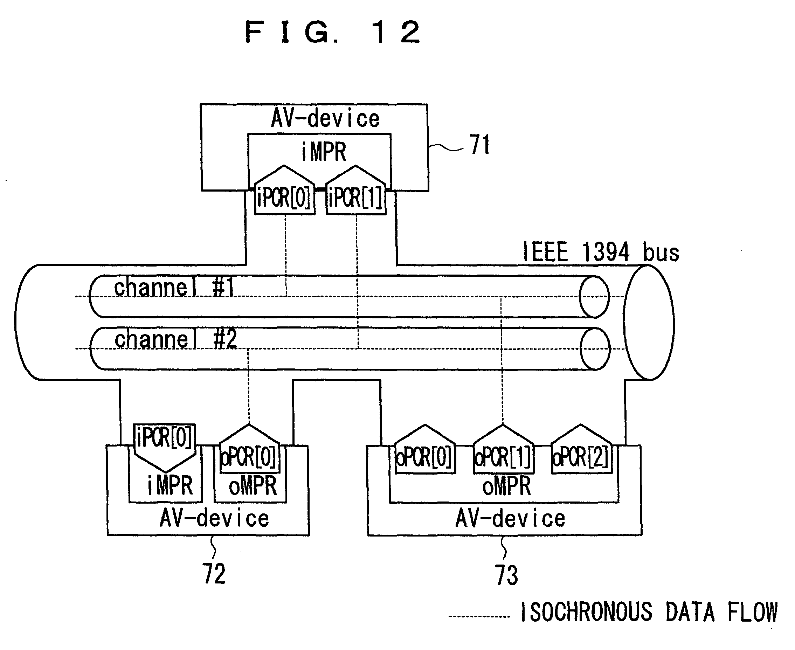

Fig. 12 is a diagram showing a relationship between plugs, plug control registers, and isochronous channels. AV devices 71-73 are interconnected through the IEEE1394 serial bus. In the example shown, the oMPR of the AV device 73 specifies the transmission rate and the number of the oPCRs, and oPCR[1] of the oPCR[0]-oPCR[2] thus specified specifies a channel into which isochronous data flows, thereby allowing the isochronous data to be transmitted to channel #1 thus specified of the IEEE1394 serial bus.

In the AV device 71, the iMPR specifies the data transmission rate and the number of iPCRs. In the example shown, of the iPCR [0] and iPCR [1] thus specified, iPCR [0] in turn specifies an input channel #1. Hence the AV device 71 reads the isochronous data sent on the channel #1 of the IEEE1394 serial bus. Similarly, the AV device 72 sends isochronous data to the channel #2 as specified by the oPCR [0]. This isochronous data on the channel #2 is read by the AV device 71 as prescribed by iPRC [1].

In this manner, data transmission is accomplished among the devices interconnected by the IEEE1394 serial bus. As shown in the example, using AV/C command sets, designed to control these devices interconnected through the IEEE1394 serial bus, the control of each of the devices and the determination of status of the devices are carried out.

Next, the AV/C command sets will be described below.

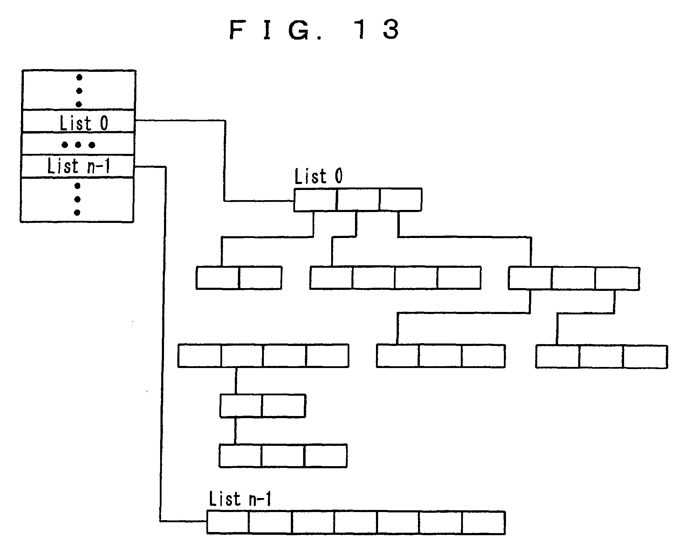

First, data structure of Subunit Identifier Descriptor of the AV/C command sets will be described with reference to Figs. 13-16.

Fig. 13 shows a data structure of Subunit Identifier Descriptor. As shown in Fig. 13, the Subunit Identifier Descriptor is formed of hierarchical lists of data, wherein "list" is, in the case of a tuner for example, channels that can be tuned to, and in the case of a music disk, pieces recorded thereon.

The upper most list of the hierarchy is called "root list". For example, list 0 is the root of the lists in the lower hierarchy. In the same sense, each of the lists 2 through (n-1) can also be a root list. There exist as many root lists as the number of objects. Here, the objects are, in the case where the AV device is a tuner for example, respective channels of digital broadcast. All the lists in the same hierarchy share common information.

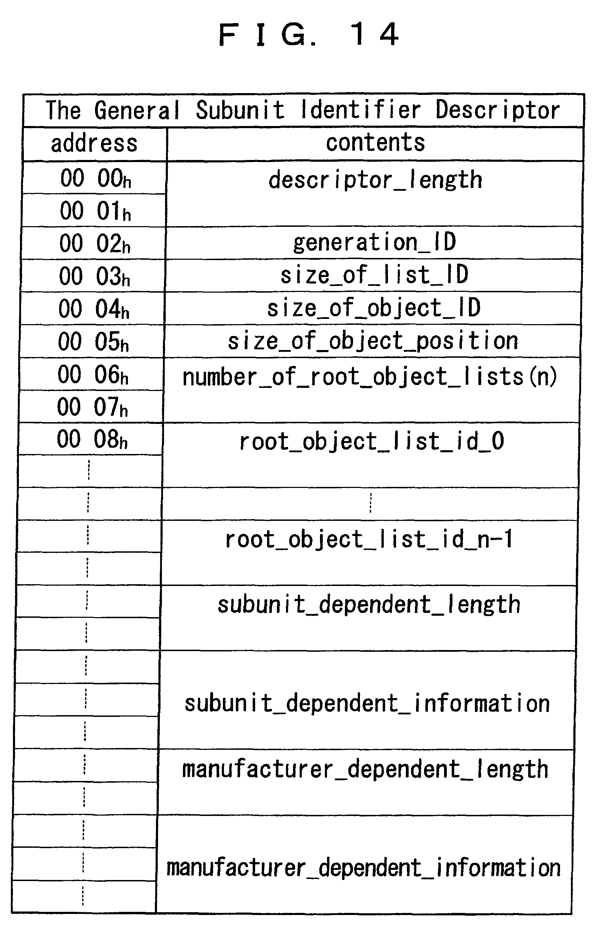

Fig. 14 shows a format of General Subunit Identifier Descriptor used in existing systems. The Subunit Identifier Descriptor contains, as its contents, attribute information about the functions of the subunit. However, the value of the descriptor length field itself is not included in the contents.

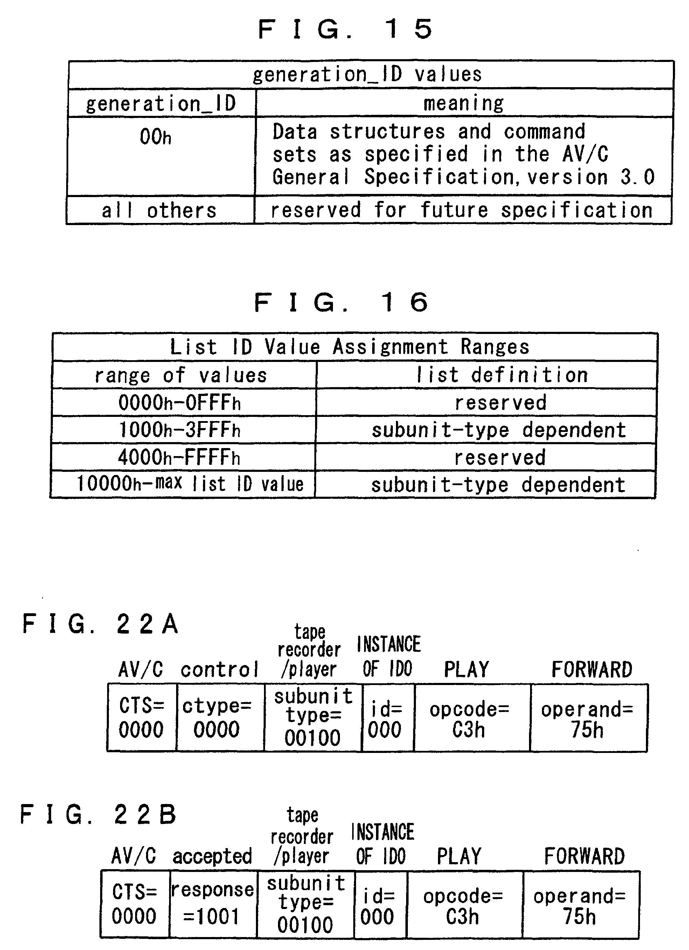

The generation_ID field specifies the version of the AV/C command set, the value of which is currently "00ₕ" ("h" denoting hexadecimal notation), as shown in Fig. 15. The value "00ₕ" implies that the data structure and the command comply with the AV/C Genera Specification of version 3.0. All the values of the generation_ID field except for "00ₕ" are reserved for future specification, as shown in Fig. 15.

The size_of_list_ID field indicates the number of bytes used to indicate a list ID. The size_of_object_ID field indicates the number of bytes used to indicate an object ID. The size_of_object_position field indicates the position of an object in the list (number of bytes) used when referring to the object during a control. The number_of_root_object_lists field indicates the number of root object lists. The root_object_list_id field indicates the ID value for identifying each of the upper most root object lists of an independent hierarchy.

The subunit_dependent_length field indicates the number of bytes occupied by the subunit_dependent_information field that follows. The subunit_dependent_information field is a field showing function-specific information. The manufacturer_dependent_length field indicates the number of bytes occupied by the manufacturer_dependent_information field that follows. The manufacturer_dependent_information field is a field indicating the specification information given by the vender (maker). This field does not exist when the manufacturer_dependent_information field is not included in the descriptor.

Fig. 16 shows the ranges of values assigned to List IDs shown in Fig. 14. Ranges, "0000ₕ"-"0FFFₕ" and "4000ₕ"-"FFFFₕ", are reserved for future assignment. Ranges, "1000ₕ"-"3FFFₕ" and "10000ₕ"-"max list ID value" are provided to distinguish the function-type dependent information.

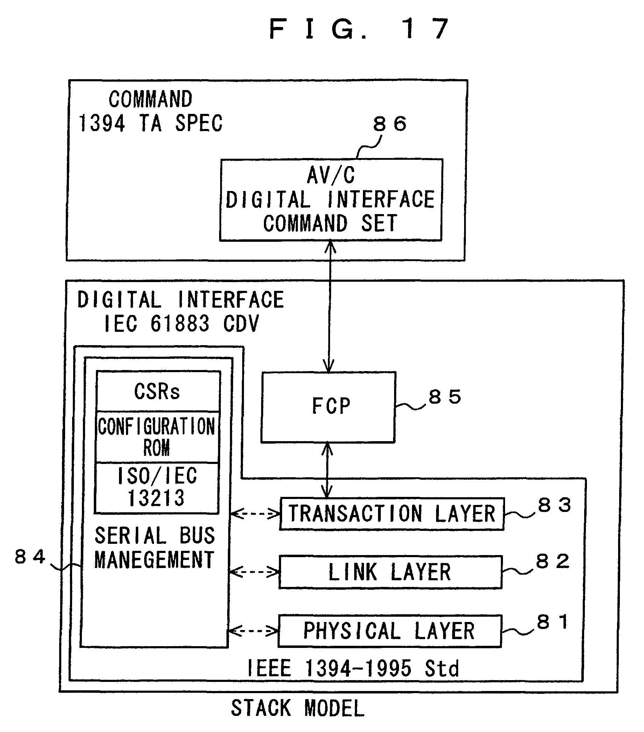

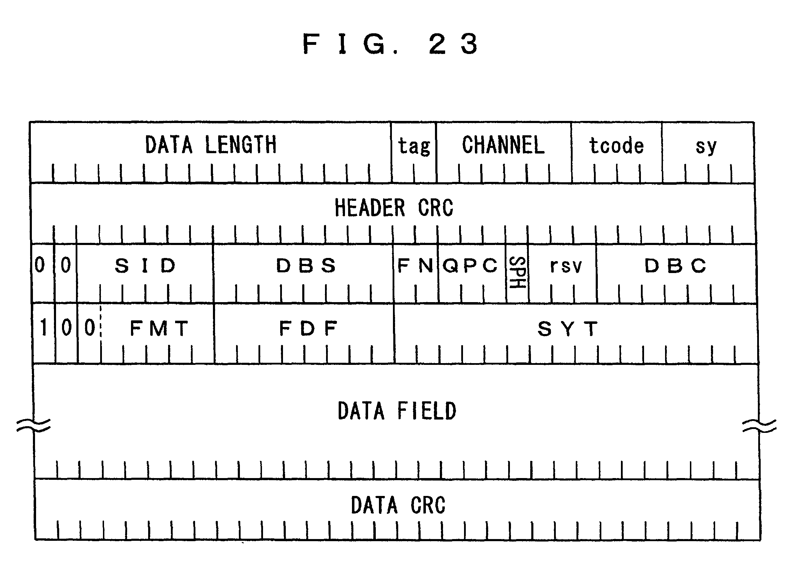

Referring to Figs. 17-22A and 22B, AV/C command sets for use in the apparatus according to the embodiment will now be described.

Fig. 17 shows a stack model of an AV/C command set. Physical layer 81, link layer 82, transaction layer 83, and serial bus management 84 are in conformity with the IEEE1394 standard. FCP (Function Control Protocol) 85 is in conformity with IEC61883 standard. AV/C command set 86 is in conformity with 1304TA specification.

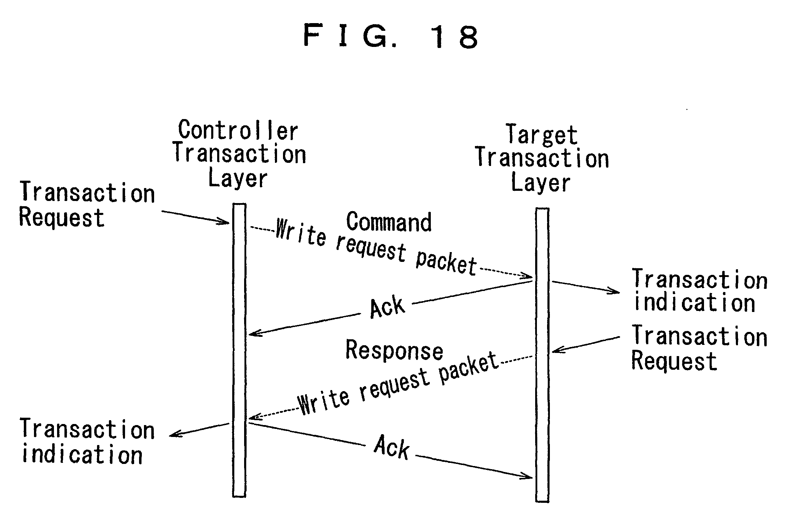

Fig. 18 is a diagram illustrating commands of FCP 85 shown in Fig. 17 and response thereto. The FCP is a protocol for controlling AV devices connected to the IEEE1394 bus. As shown in Fig. 18, a controlling device is referred to as controller, while a device controlled is referred to as target. FCP commands and responses thereto are transmitted among the nodes using write transactions in IEEE1394 asynchronous communication mode. As a confirmation of reception of data, the target that has received that data returns acknowledgment to the controller.

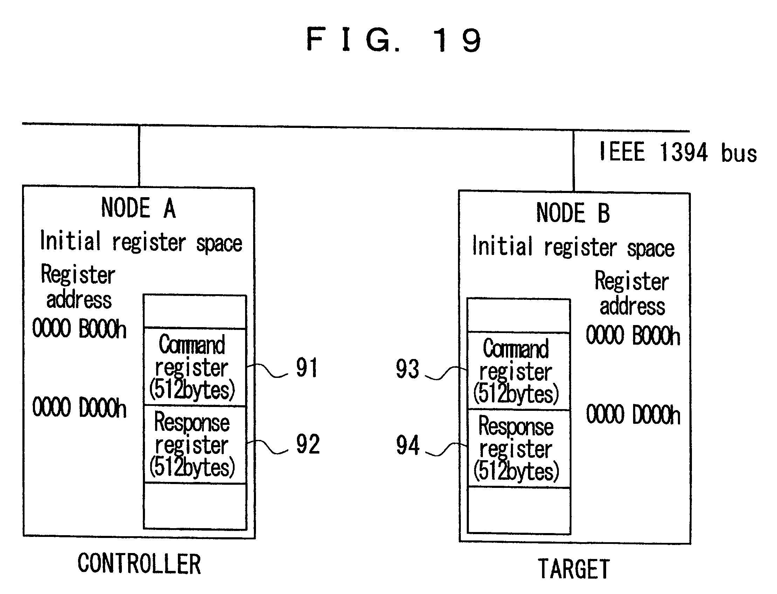

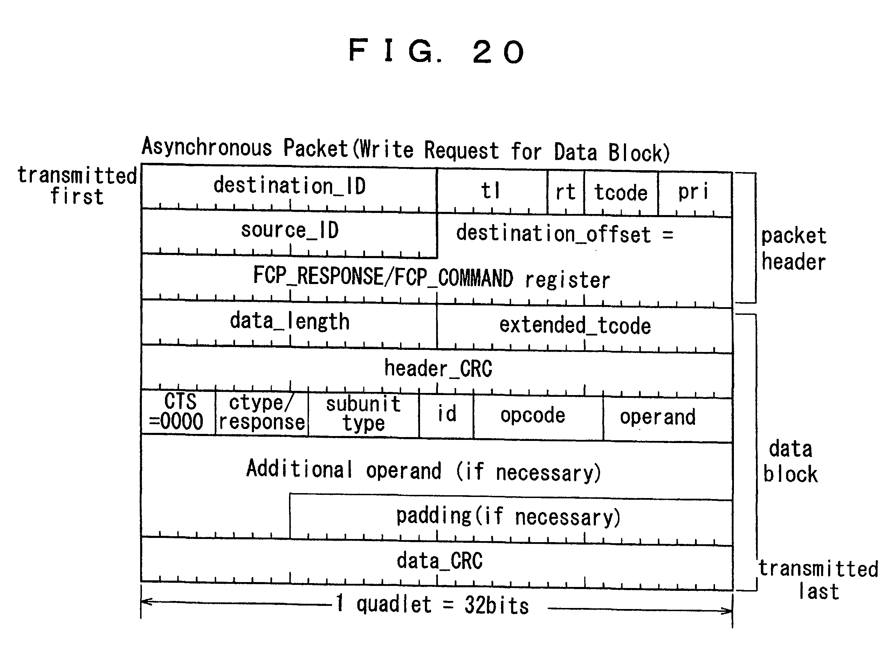

Fig. 19 is a diagram illustrating in more detail a relationship between an FCP command and a response thereto. Node A and node B are connected via the IEEE1394 bus. The node A is a controller and the node B is a target. Nodes A and B are provided with respective 512-byte command registers 91, 93, and respective 512-byte response registers 92, 94. As shown in Fig. 19, the controller can give the target a command by writing a command massage into the command register 93 of the target. Conversely, the target respond to the controller by writing a response message into the response register 92 of the controller. In association with the two messages mentioned above, the controller and the target exchange control information between them. The kind of the command set sent by the FCP is recorded in a CTS data field shown in Fig. 20 as described later.

Fig. 20 shows a data structure of a packet of an AV/C command transmitted in asynchronous transfer mode. The AV/C command set is a command set for controlling AV devices, with CTS (command set ID) being "0000". AV/C command frames and response frames are transmitted among the nodes using the above mentioned FCP. In order not to burden the bus and the AV devices, the response to a command is done within 100 ms. As shown in Fig. 20, data of an asynchronous packet consists of 32 bits (1 quadlet). The header of a packet is shown in the upper section of Fig. 20. Its data block is shown in the lower section of Fig. 20. The destination_ID field indicates destination to which the packet is sent.

The CTS field indicates the ID of a command set. For example, for an AV/C command set, the value of CTS is "0000". The ctype/response field indicates a functional category when the packet is a command, whereas it indicates processed result of a command when the packet is a response. Commands are classified in the large into the following four types: (1) commands for externally controlling the functions (CONTROL); (2) commands for externally inquiring status (STATUS), (3) commands for externally inquiring if a control command is supported or not (GENERAL INQUIRY as to if an opcode is supported or not and SPECIFIC INQUIRY as to if an opcode and its operand are supported or not); and (4) commands requesting for notification of a change in status to external devices (NOTIFY).

Responses are returned in accordance with the types of the command. The responses to CONTROL commands include NOT IMPLEMENTED, ACCEPTED, REJECTED, and INTERIM. The responses to STATUS commands include NOT IMPLEMENTED, REJECTED, IN TRANSITION, and STABLE. The responses to GENERAL INQUIRY commands and SPECIFIC INQUIRY commands include IMPLEMENTED and NOT IMPLEMENTED. The responses to NOTIFY commands include NOT IMPLEMENTED, REJECTED, INTERIM, and CHANGED.

The subunit type field specifies the function(s) within a unit such as a tape recorder/player and a tuner. In order to distinguish respective subunits of the same type, they are addressed by a distinct number called "subunit id". The opcode field indicates respective commands. The operand field indicates a parameter of the command. The Additional operands field is a field added to the packet as needed. The padding field is also a field added as needed. The data_CRC (cyclic redundancy check) field is used to check errors during transmission of data.

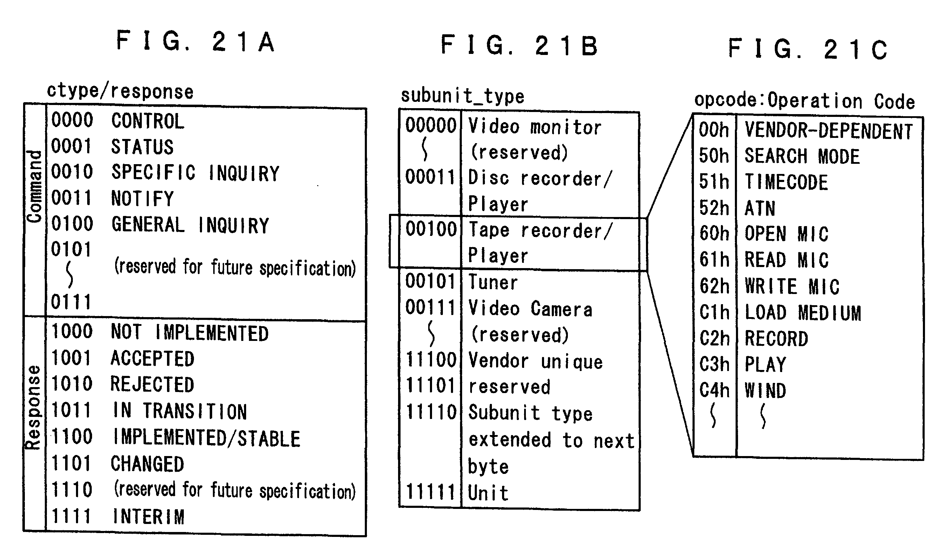

Figs. 21A-21C show specific examples of AV/C commands. Fig. 21A shows examples of the ctype/response field. Listed in the upper section of Fig. 21A are commands, and in the lower section, responses. CONTROL is assigned to "0000", STATUS is assigned to "0001", SPECIFIC INQUIRY is assigned to "0010", NOTIFY is assigned to "0011", and GENERAL INQUIRY is assigned to "0100". "0101"-"0111" are reserved for future specification. NOT IMPLEMENTED is assigned to "1000", ACCEPTED is assigned to "1001", REJECTED is assigned to "1010", IN TRANSITION is assigned to "1011", IMPLEMENTED/STABLE is assigned to "1100", CHANGED is assigned to "1101", and INTERIM is assigned to "1111". "1110" is reserved for future specification.

Fig. 21B shows examples of the subunit type field. Video Monitor is assigned to "00000", Disk recorder/Player is assigned to "00011", Tape recorder/Player is assigned to "00100", Tuner is assigned to "00101", Video Camera is assigned to "00111", Vendor unique is assigned to "11100", and "Subunit type extended to next byte" is assigned to "11110". It is seen that Unit is assigned to "11111", which is used only when addressing an apparatus itself in an occasion of, for example, turning on or off the power source.

Fig. 21C shows an example of the opcode field. There exists a table of opcodes for each subunit type. Shown in Fig. 21C is the opcode when the subunit_type field is Tape recorder/Player. A set of operands is defined for each opcode. In the example shown in Fig. 21C, VENDOR-DEPENDENT is assigned to "00ₕ"; SEARCH MODE to "50ₕ"; TIMECODE to "51ₕ"; ATN to "52ₕ"; OPEN MIC to "60ₕ"; READ MIC to "61ₕ"; WRITE MIC to "62ₕ"; LOAD MEDIUM to "C1ₕ"; RECORD to "C2ₕ"; PLAY to "C3ₕ"; and WIND to "C4ₕ".

Fig. 22A and Fig. 22B respectively show an example of an AV/C command field and a response field. For example, in order to instruct a replay to a replay device as the target (consumer), a controller sends a command as shown in Fig. 22A to the target. Since this command uses the AV/C command set, its CTS is set to "0000".

The command type, ctype, is set to "0000", since CONTROL command is used to externally control the target (see Fig. 21A). Since the subunit type is presently Tape recorder/Player, the command type, subunit type, is set to "00100" (see Fig. 21B). It is shown that id = 000, which implies that this is an instance of ID0. The value of opcode is now "C3ₕ", implying that the command is instructing a replay (see Fig. 21C). Operand has a value of "75ₕ", which implies FORWARD.

When replayed, the target returns a response as shown in Fig. 22B to the controller. In this instance, the "response" has a value of "1001", since the Response field indicates "accepted" (see Fig. 21A). Since the parameters other than "response" of the Response field are the same as those of the command field of Fig. 22A, further description of the parameters will not be repeated.

Fig. 23 shows a structure of one isochronous packet (Iso packet) transferred through the isochronous channels described above. Provided at a head of each packet is a header which includes data length, tag, and channel and the like needed for transmitting the packet, along with a header correction code (CRC) for correction of the header. The header has a format defined in IEEE1394-1995 standard.

The data segment that follows the header is cast in the IEC 61883 standard format defined for transmitting audio-music data. In this standard, the leading 64-bit of the data segment is allocated for a header and the remaining is allocated for data fields, and the last 32-bit segment is reserved for a data correction code (CRC). It is noted in the embodiment shown herein that the data is recognized as audio music data by FMT data included in the header block. It is seen from FDF data that the data is based on AM824 standard.

In the AM824 standard, data is provided for the data field in the unit of 32 bits. Arbitrary number of the units of 32 bits is provided for the data field. In the example shown herein, the leading 8 bits of each 32-bit unitary data constitute label data, and the remaining 24 bits constitute actual transmission data such as audio data.

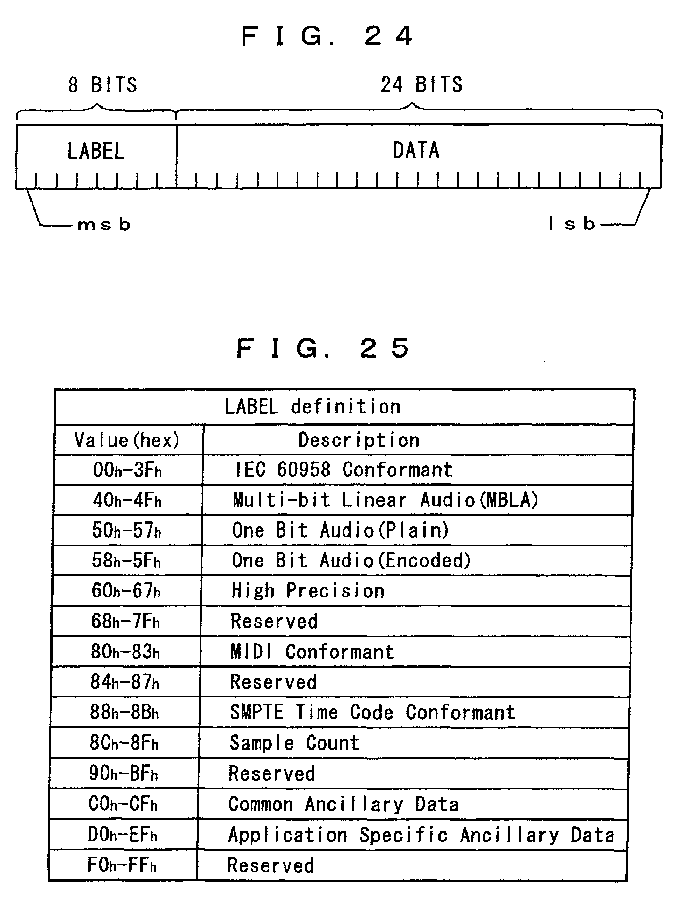

Fig. 24 shows a data structure of the unitary 32-bit data. The label data is placed in the leading 8-bit block of the 32-bit data. The label data indicates the type of audio data that follow. Audio data is also placed in the remaining 24-bit block thereof.

Fig. 25 is a table listing definitions of label (LABEL) data. Each of the definitions corresponds to a value of 2-digit hexadecimal number which is indicated with 8 bits.

If the label data indicates a value within the range of "00"-"3F", then it is followed by audio data written in IEC60958 standard (i.e., IEC 60958 Conformant); If the label data indicates a value within the range of "40"-"4Fₕ", then it is followed by Multi-bit linear audio data (MBLA)of multi-bit scheme; If the label data indicates a value within the range of "50"-"5F", then it is followed by linear audio data of 1-bit scheme(One Bit Audio); If the label data indicates a value within the range of "60"-"67", then it is followed by multi-bit linear audio data of high-precision scheme.

If the label data indicate a value within the range of "80"-"83", it is followed by MIDI standard instrumental data. If the label data indicates within the range of "88"-"8B", then it is followed by time code of SMPTE time code conformant (SMPTE Time Code Conformant). If the label data indicates a value within the range of "8C"-"8F", then it is followed by sample count data (Sample Count Data).

If the label data indicates within the range of "CO"-"CF", then it is followed by common ancillary data (Common Ancillary Data) such as audio software information delivery (ASID) data. If the label data indicates within the range of "DO"-"EF", then it is followed by application-specific ancillary data (Application Specific Ancillary Data).

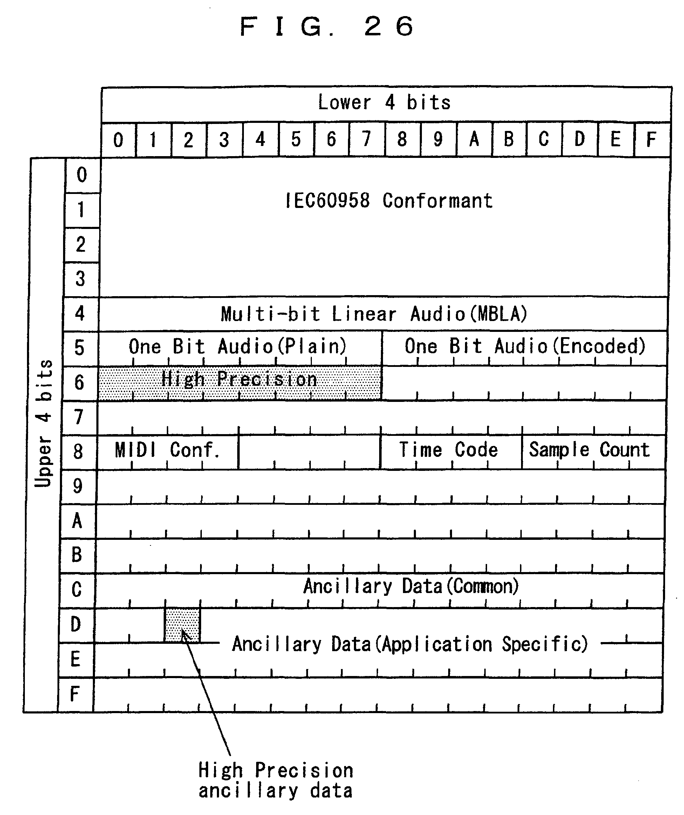

Fig. 26 is a diagram showing a relationship between the above 8-bit label data and the data placed in subsequent blocks with an ordinate marked by the upper 4 bits of the label data and an abscissa marked by the lower 4 bits of the label data.

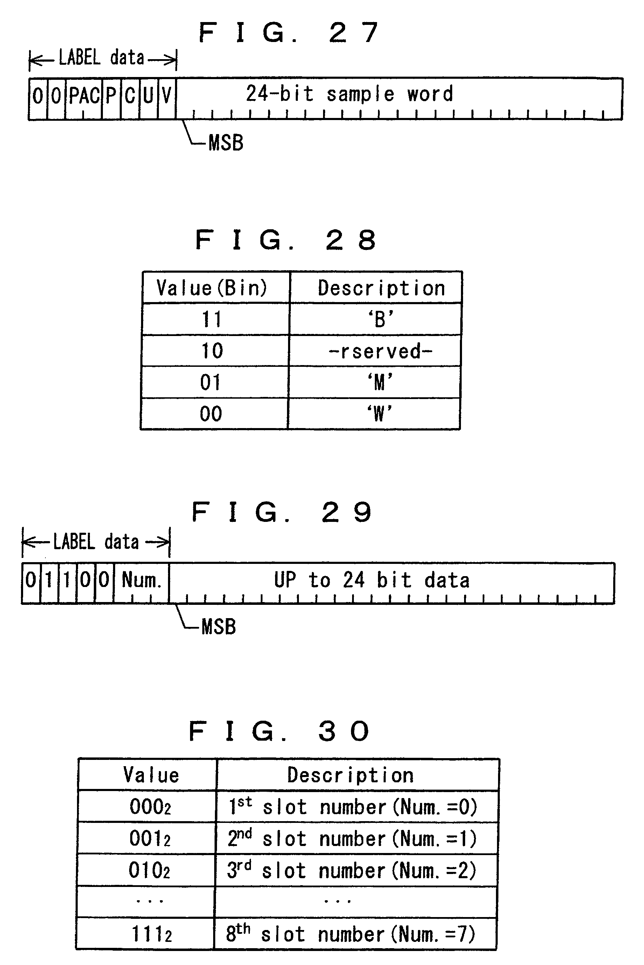

Fig. 27 shows a data structure of a unitary 32-bit data having the label data within the range of "00ₕ"-"3Fₕ" which is followed by IEC60958 audio data in the subsequent blocks. 3SB and 4SB in the label data indicate a preamble code (PAC). Fig. 28 shows definitions of PACs.

Fig. 29 shows a data structure of unitary 32-bit data, or 1 slot, having the label data within the range of "60"-"67" followed by multi-bit linear audio data of high-precision scheme in the subsequent block. The lowest 3 bits of the label data indicate a slot number of the slot used in the transmission of data of one sample. Fig. 30 shows a relationship between the value of the lowest 3 bits and the slot number.

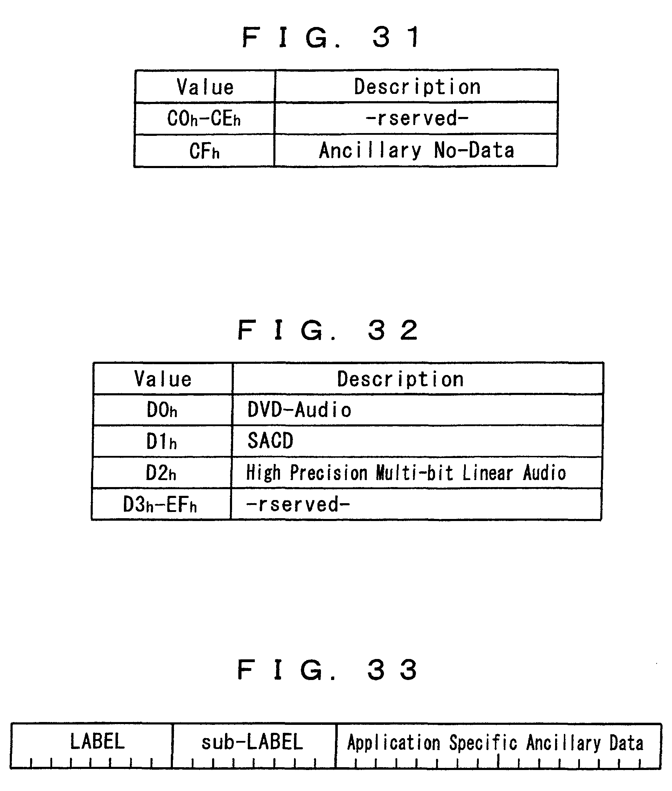

Fig. 31 shows a relationship between the value of label data within the range of "C0"-"CF" and the content of common ancillary data that follows the label data in the subsequent blocks. It is seen that if the label data has a value "CF", no ancillary data exists. The rest of the label data are reserved for future specification.

Fig. 32 shows a relationship between the value of label data within the range of "D0"-"EF" and the content of application specific ancillary data that follows the label data in the subsequent blocks. When the label data indicates a value, "D0", it is followed by DVD-audio ancillary data in the subsequent block. When the label data indicates a value, "D1", it is followed by SACD ancillary data in the subsequent block. When the label data indicates a value,"D2", it is followed by high-precision ancillary data in the subsequent blocks. Values of Label data within the range of "D3"-"EF" are reserved for future specification.

Fig. 33 shows a general format of the application specific ancillary data. The first byte (label data) indicates that the data is application specific ancillary data. The second byte (sub-label data) is provided for recognition of the data that follows.

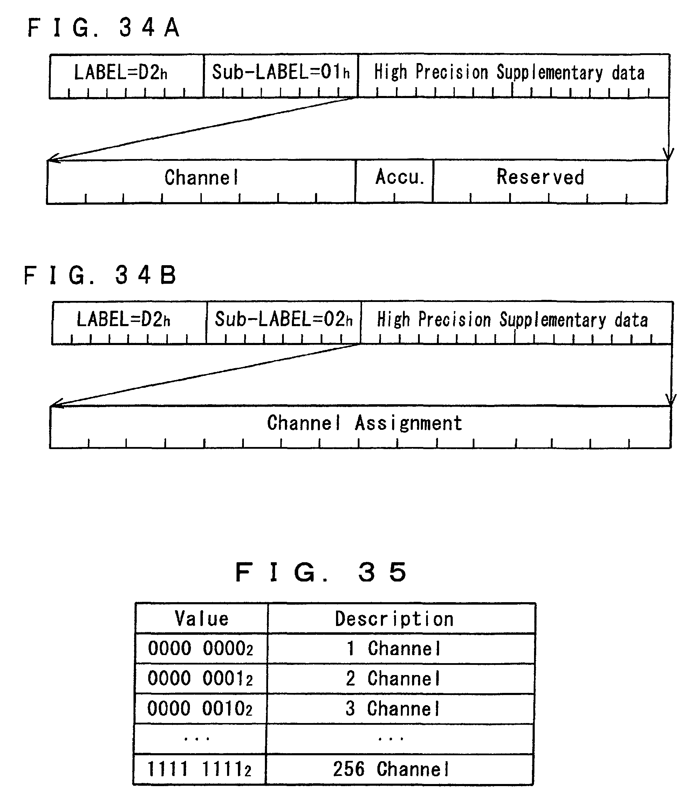

Fig. 34A shows a data structure of 32-bit high precision supplementary data. The first byte (label data) indicates a value, "D2ₕ", indicating that the data is high-precision supplementary data. The second byte (Sub-LABEL data) indicates a value, "01ₕ", indicating that the subsequent 2-byte data contains 8-bit channel data (Channel) and 4-bit accuracy data (Accuracy). The supplementary data is added to every data block to be transmitted.

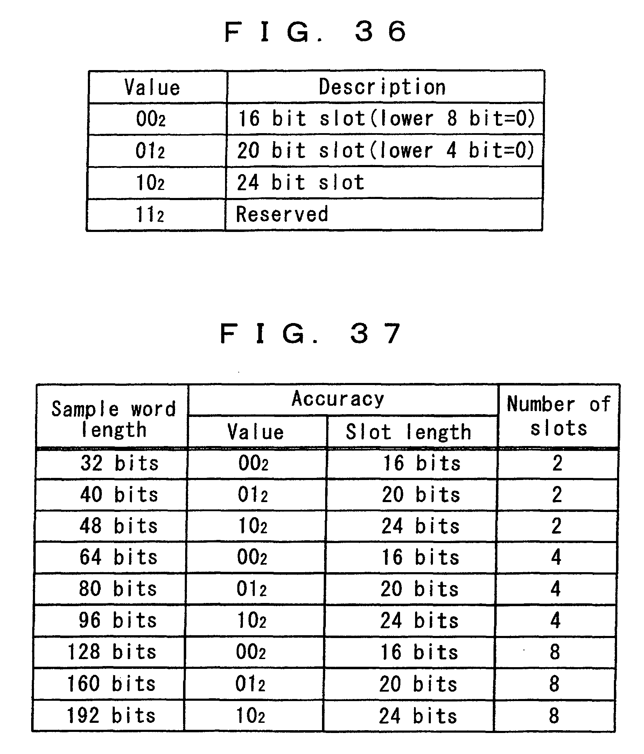

Fig. 35 shows a relationship between the value of 8-bit channel data and the number of channels used. Fig. 36 shows a relationship between the value of accuracy data and the number of bits used in the transmission of audio data within a 24-bit block constituting a slot. When the accuracy data indicates a value, "00₂", it indicates that the lower 8 bits are 0 using 16 bits of the 24-bit block. When the accuracy data indicates a value, "01₂", it indicates that the lower 4 bits are 0 using 20 bits of the 24-bit block. When the accuracy data indicates a value, "10₂", it indicates that all bits of the 24-bit block are used. A value of precision data, "11₂", is reserved for future specification.

Fig. 34B shows another data structure of 32-bit high precision supplementary data. The first byte (label data) indicates a value, "D2ₕ", indicating that the data is high-precision supplementary data. The second byte (Sub-LABEL data) indicates a value, "02ₕ", indicating that the 2-byte data is 8-bit channel assignment data (Channel Assignment). Addition of this supplementary data to the block is arbitrary, and the value for it is not presently defined.

Fig. 37 shows recommended slot lengths and recommended number of slots in each sample word length (number of bits in the data of one sample). In the embodiment, recommended sample lengths are 32, 40, 48, 64, 80, 96, 128, 160, and 192 bits. Recommended numbers of slots are 2, 4, and 8.

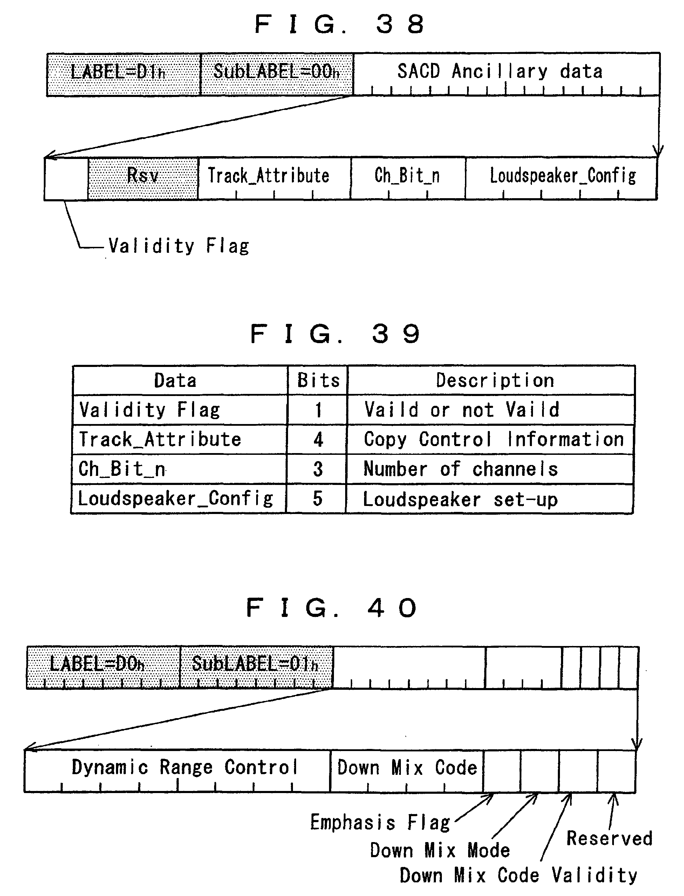

Fig. 38 shows a data structure of 32-bit SACD ancillary data. The first byte (label data) indicates a value, "D1ₕ", indicating that the data is Super Audio CD (SACD) ancillary data. When the second byte (SubLABEL data) indicates a value, "00ₕ", it indicates that the subsequent 2-byte data includes 1-bit validity flag data (Validity Flag), 4-bit track attribute data (Track_Attribute), 3-bit channel data (Ch_Bit_n), and 5-bit loudspeaker configuration data (Loudspeaker_Config). The 3-bit Rsv data, having a default value of "000₂", is reserved for future specification.

Fig. 39 is a table listing the contents of each item of SACD ancillary data. The validity flag data indicates validity of the data in the frame. When a vale of "0₂" is indicated, the data is valid. When a value of "1₂" is indicated, the data is invalid. The track attribute data indicates copy control information of the Super Audio CD (SACD). The channel data indicates the total number of channels. The loudspeaker configuration data indicates set-up information of a loudspeaker.

Fig. 40 shows a data structure of 32-bit DVD-Audio ancillary data. The first byte (label data) indicates a value, "D0ₕ", indicating that the data is DVD-Audio ancillary data. When the second byte (SubLABEL data) indicates a value, "01ₕ", it indicates that the subsequent 2-byte data include 8-bit dynamic range control data (Dynamic Range Control), 4-bit down mix code data (Down Mix Code), 1-bit emphasis flag data (Emphasis Flag), 1-bit down mix mode data (Down Mix Mode), and 1-bit down mix code validity data (Down Mix Code Validity).

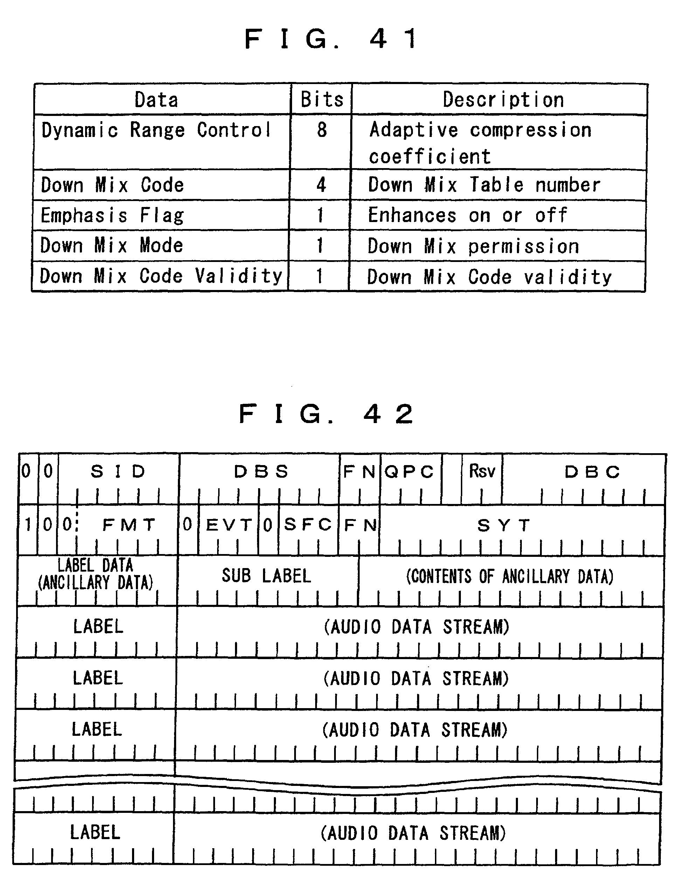

Fig. 41 is a table listing the contents of each item of DVD-Audio ancillary data. The dynamic range control data indicates adaptive compression coefficient. The down mix code indicates the down mix table number. The emphasis flag data indicates on or off of emphasis. The down mix mode data indicates permission of down mix. The down mix code validity data indicates the validity of the down mix code.

Fig. 42 shows an exemplary data arrangement of the above described ancillary data placed in one packet along with audio data. In the example shown herein, the ancillary data is placed in the leading 32-bit block of the data field of one packet. In the remaining data field, arbitrary number of audio data is placed in a unit of 32 bits (with the first 8 bits allocated for label data).

It should be understood that, although the example shown in Fig. 42 includes only one unit of ancillary data, multiple units of ancillary data may be placed in one packet. For example, in the data transmission of high-precision scheme audio data, the supplementary data as shown in Figs 34A and 34B may be simultaneously placed in one packet.

In the audio system 10 shown in Fig. 1, IEC60958 audio data is transmitted from the CD player 5 to the preamplifier 6 via the bus 9. In this case, multiple units of data having a data structure as shown in Fig. 27 are placed in the data field of one packet and then, they are transmitted.

In the audio system 10 shown in Fig. 1, high-precision scheme audio data is transmitted from the preamplifier 6 to the power amplifier 7 via the bus 9. In this case, multiple units of high-precision supplementary data as shown in Figs. 34A and 34B and multiple units of high-precision scheme multi-bit linear audio data as shown in Fig. 29 are placed in the data field of one packet and then, they are transmitted. In this case, bit data of one sample is divided into multiple segments and transmitted using multiple slots.

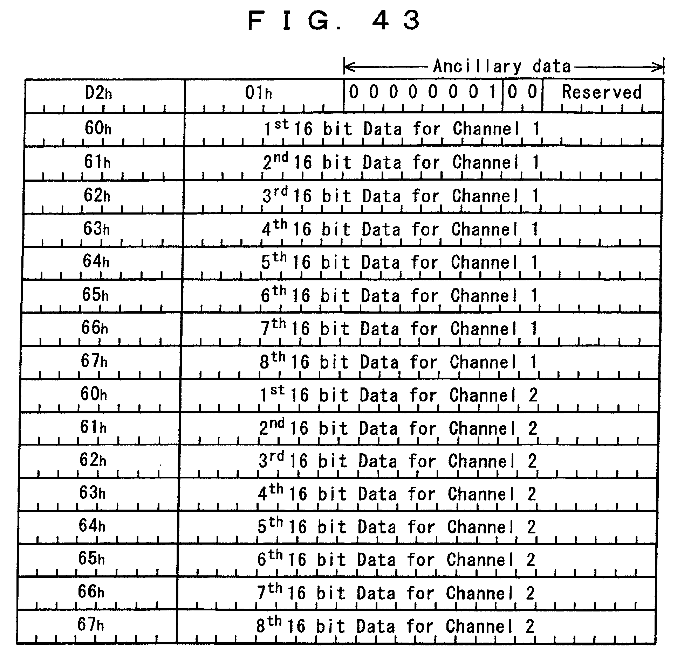

Fig. 43 shows an exemplary high-precision stream placed in the data field of one packet. This is an example in which the sample word length (i.e. number of bits of data of one sample) is 128 bits, and linear audio data for 2 channels is transmitted using 8 slots per channel (1 slot consisting of 32 bits). Herein all the lowest 8 bits of the 24-bit block of each slot available for linear audio data are "0".

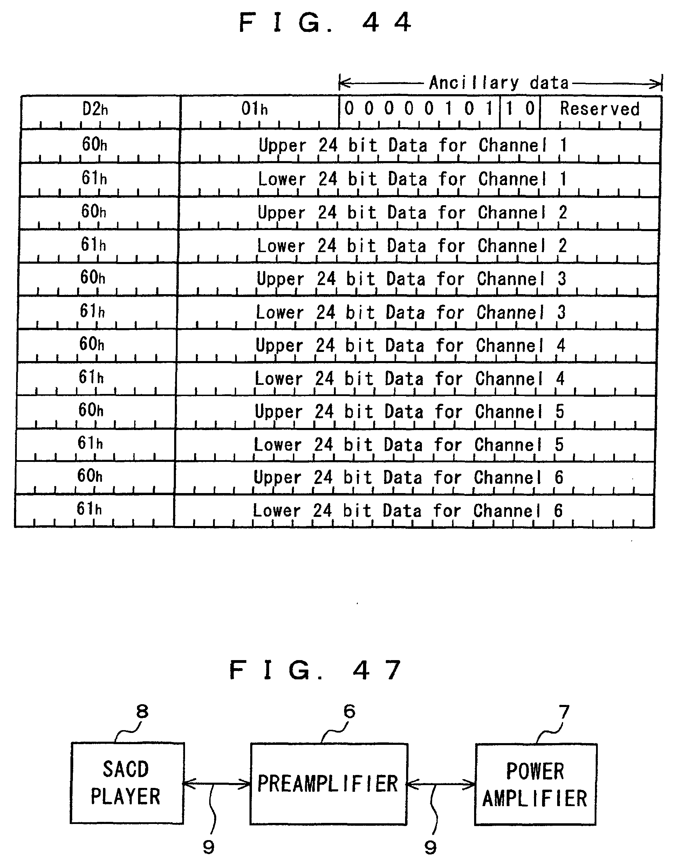

Fig. 44 shows another exemplary high-precision stream placed in the data filed of one packet. This is an example in which the sample word length is 48 bits, and linear audio data for 6 channels is transmitted using 2 slots per channel.

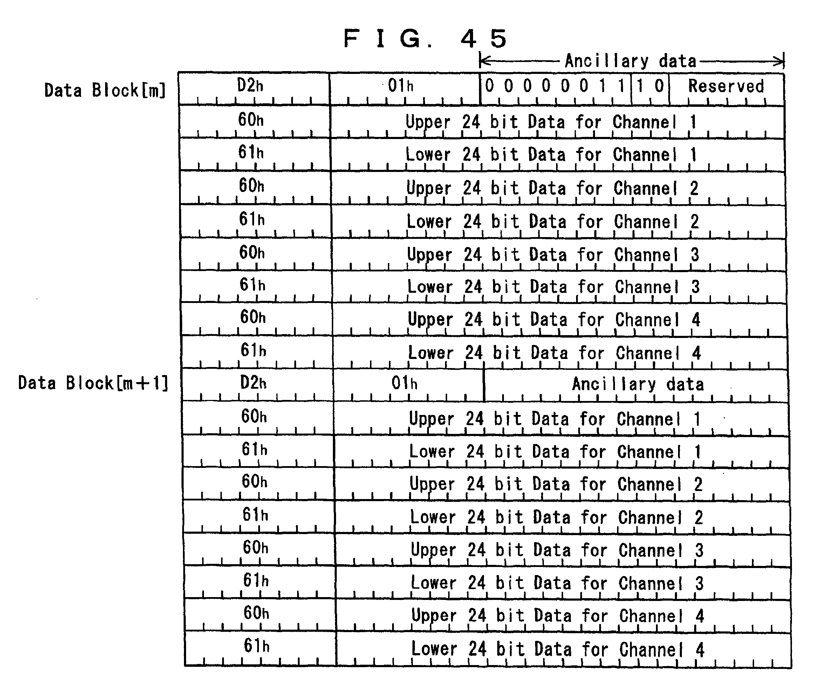

Fig. 45 shows a still another example of high precision stream placed in the data field of one packet. This is an example in which the packet includes 2 blocks of data. In this example, sample word length is 48 bits, and the 2 blocks include linear audio data for 4 channels, which are transmitted using 2 slots per channel. A further example consisting of more than two data blocks can be realized.

As described above, according to the embodiment, audio data is transmitted from the preamplifier 6 to the power amplifier 7 in a high-precision scheme. That is, each bit constituting data of one sample data can be transmitted using multiple slots (with each slot having 32 bits.) Thus, the data of one sample can be successfully transmitted with high precision if the data of one sample exceeds the maximum permissible bits (24 bits) available for transmitting the data by one slot.

Although, in the above-described embodiments, when transmitting audio data in high-precision schemes, linear audio data has been placed in 24-bit block as the audio data, compressed audio data can be placed equally well in the 24-bit block as the audio data.

In the above embodiments, in transmitting audio data in high-precision scheme, the multiple units of high-precision multi-bit linear audio data (body data) have followed high-precision ancillary data. Another type of ancillary data, body data, or the ancillary data plus body data, however, may be placed between the ancillary data and the high-precision multi-bit linear audio data.

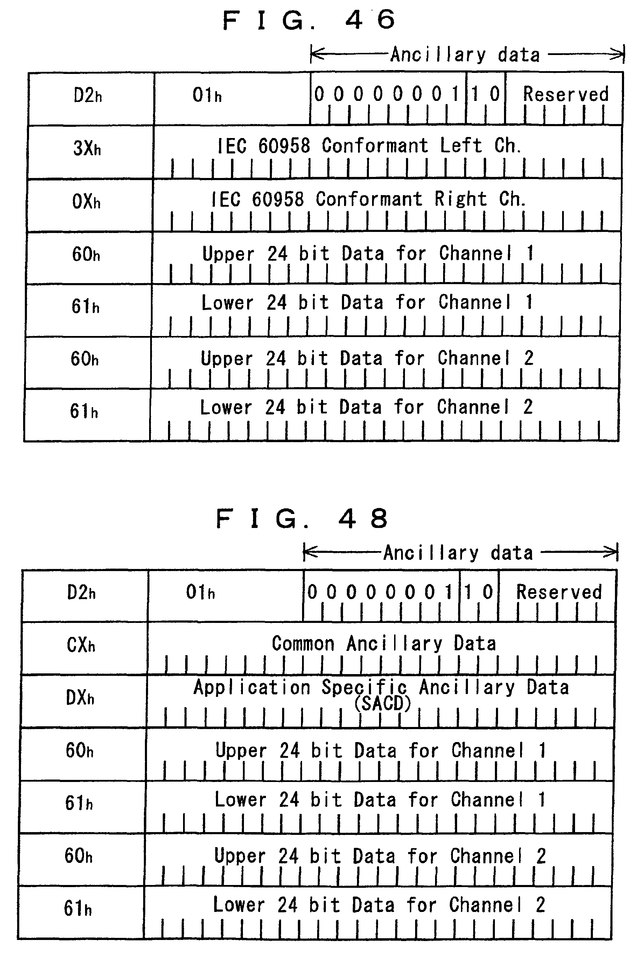

For example, in the audio system 10 as shown in Fig. 1, IEC60958 audio data (body data) may be placed between the ancillary data and the high-precision multi-bit linear audio data, as shown in Fig. 46. In this instance, the high-precision ancillary data is followed by slots that contain left channel data and slots that contain right channel data.

In this way, when IEC60958 audio data (body data) is added, the power amplifier 7 can directly obtain and utilizes information such as user's bit and channel status information contained in the IEC60958 audio data.

When, as shown in Fig. 47, the SACD audio data obtained by an SACD player is fed to the preamplifier 6 through the bus 9 and the preamplifier 6 processes the data to high-precision scheme audio data to supply the data thus processed to the power amplifier 7, it is conceivable that a slot of common ancillary data that includes proprietor information and a slot of SACD ancillary data are placed between the ancillary data and the high-precision multi-bit linear audio data, as shown in Fig. 48.

When such SACD ancillary data and the like are added, the power amplifier 7 can directly obtain the SACD ancillary data and recognize that the audio data comply with the SACD standard. If the data is encrypted, it can decrypt the encrypted data. Furthermore, the SACD audio data (audio body data) may be added in addition to the SACD ancillary data.

While the present invention is applied to an audio system for transmitting audio data according to the above-described embodiments, it will be apparent that the invention may be applied equally well to a method and a device for transmitting video data. It will be also apparent that data buses other than IEEE1394 bus may be used equally well.

In accordance with the present invention, high-quality data can be transmitted in a predetermined format having a predetermined data length among devices connected to a predetermined bus line by transmitting data of one sample using multiple slots each having a predetermined data length.

Also in accordance with the invention, processing data of first scheme and converting the data thus processed into data of second scheme and then transmitting the data with at least a portion of the data of first scheme being added into the data of the second scheme allows information contained in the data of first scheme to be directly obtained from information added into the data of second scheme.

### INDUSTRIAL APPLICABILITY

As described above, a method and an apparatus for transmitting data according to the invention are preferably applied to a case where different types or schemes of audio data and image data are transmitted using, for example, IEEE1394 bus line.

## Claims

1. A method of transmitting data among pieces of apparatus each connected to a predetermined bus line in a unit of a predetermined data length and in a predetermined format wherein data of one sample is transmitted using multiple slots of said predetermined data length.

2. The method of transmitting data according to claim 1, wherein said data of one sample is transmitted with additional information having said predetermined data length and including information on number of channels being added to a head of said multiple slots, said multiple slots corresponding to said data of one sample, said number of channels specified by the number of channels corresponding to number of said slots.

3. The method of transmitting data according to claim 2, wherein said additional information further includes information on the number of bits transmitted in one slot.

4. An apparatus for transmitting data, said apparatus comprising:
data acquisition means for acquiring a predetermined item of transmission data including consecutive items of data of multiple samples, said items of data of one sample having N bits (N being an integer larger than 1);
data generation means for generating data having a predetermined data length by dividing said items of data of the respective samples constituting said predetermined item of transmission data acquired by the data acquisition means into M segments (M being an integer larger than 1) and adding label data to each head of the M segments of the items of data of the respective samples, said label data indicating a format of said transmission data and an arranged position of each segment; and
data sending means for sending said data having the predetermined data length generated by said data generation means to a predetermined bus line.

5. The apparatus for transmitting data according to claim 4, wherein said data sending means sends to said predetermined bus line said data having the predetermined data length with additional information having said predetermined data length and including information on number of channels being added to a head of said M segments each having a predetermined data length, said M segments corresponding to said data of one sample, said number of channels specified by the number of channels corresponding to said M segments.

6. The apparatus for transmitting data according to claim 5, wherein said additional information further includes information on the number of bits included in each segment.

7. A method of transmitting data, said method comprising steps of:
acquiring a predetermined item of transmission data including consecutive items of data of multiple samples, said items of data of one sample having N bits (N being an integer larger than 1);
respectively dividing the items of data of said respective samples constituting the predetermined item of transmission data thus acquired into M segments (M being an integer larger than 1);
generating data having a predetermined data length by adding label data to each head of the M segments of respective items of data of said samples, said label data indicating a format of said transmission data and an arranged position of each segment; and
sending said data thus generated having the predetermined data length to a predetermined bus line.

8. An Apparatus for transmitting data, said apparatus comprising:
data reception means for receiving from a predetermined bus line consecutive items of data having a predetermined data length; and
data generation means for generating data including data of one sample, said data of one sample having N bits (N being an integer larger than 1), by determining an arranged position of each of the M items of data (M being an integer larger than 1) included in said consecutive items of data with referring label data added to the respective items of data and integrating first through Mth items of data.

9. A method of transmitting data, said method comprising steps of:
receiving from a predetermined bus line consecutive items of data having a predetermined data length;
determining an arranged position of each of the M items of data (M being an integer larger than 1) included in said consecutive items of data, with referring label data added to the respective items of data;
integrating first through Mth items of data; and
generating an item of data including consecutive items of data, said items of data of one sample having N bits (N being an integer larger than 1).

10. A method of transmitting data, said method comprising steps of:
processing transmission data of first scheme to generate transmission data of second scheme; and
transmitting said data with at least a portion of said transmission data of first scheme being added to said transmission data of second scheme.

11. The method of transmitting data according to claim 10, wherein said data is transmitted with said transmission data of first scheme being entirely added to said transmission data of second scheme.

12. The method of transmitting data according to claim 10,
wherein said transmission data of first scheme includes body data and ancillary data associated with said body data; and
wherein said data is transmitted with said body data of said transmission data of first scheme being added to said transmission data of second scheme.

13. The method of transmitting data according to claim 10,
wherein said transmission data of first scheme includes body data and ancillary data associated with said body data; and
wherein said data is transmitted with said ancillary data of said transmission data of first scheme being added to said transmission data of second scheme.

14. An apparatus for transmitting data, said apparatus comprising:
data-processing means for processing transmission data of first scheme to generate transmission data of second scheme; and
data transmission means for transmitting the data with at least a portion of the transmission data of first scheme being added to the transmission data of second scheme generated by the data processing means.
